# EUROPÄISCHE PATENTSCHRIFT

(11) **EP 2 930 060 B1**
(45) Veröffentlichungstag und Bekanntmachung des Hinweises auf die Patenterteilung: **10.05.2017**
(21) Anmeldenummer: 15162387.3
(22) Anmeldetag: 02.04.2015
(51) Int. Cl.: B60P 1/28

(54) **LASTENTRANSPORTBEHÄLTER FÜR EIN LASTENTRANSPORTFAHRZEUG**
LOAD TRANSPORT CONTAINER FOR A LOAD CARRYING VEHICLE
RÉCIPIENT DE TRANSPORT DE CHARGES POUR UN VÉHICULE DE TRANSPORT DE CHARGES

(30) Priorität: 04.04.2014 DE 102014206525
(43) Veröffentlichungstag der Anmeldung: 14.10.2015
(73) Patentinhaber: Franz Xaver Meiller Fahrzeug- und Maschinenfabrik-GmbH & Co KG, 80997 München (DE)
(72) Erfinder: Fuß, Andreas, 82054 Sauerlach (DE)
(74) Vertreter: Tiesmeyer, Johannes

(56) Entgegenhaltungen:
- DE-U- 1 842 640
- US-A1- 2010 264 692

## Beschreibung

Die Erfindung betrifft einen Lastentransportbehälter für ein Lastentransportfahrzeug, umfassend eine Wandanordnung mit Wandbereichen, die eine einen Laderaum des Transportbehälters zumindest bereichsweise begrenzende Innenhaut aus Blech, eine Schicht aus wärmeisolierendem Material außenseitig der Innenhaut und eine das wärmeisolierende Material außen überdeckende Außenhaut aus Blech aufweisen, wobei die Innenhaut mit daran außenliegend in Längsrichtung des Lastentransportbehälters verlaufenden und quer zur Längsrichtung des Lastentransportbehälters beabstandeten Rahmenteilen fest verbunden ist.

Die Erfindung befasst sich allgemein mit der Verbesserung von Transportbehältern für den Transport von temperatursensiblen Materialien, also Materialien, die thermisch isoliert zu transportieren sind. Hierbei kann es sich z.B. um erhitztes Straßenbelagsmaterial für den Straßenbau handeln. Als Transportbehälter für derartiges Fördergut kommen thermisch isolierte Kippbrücken von Kipperfahrzeugen in Frage. Ein Lastentransportbehälter der hier betrachteten Art kann z.B. eine Kippmulde eines Kipperfahrzeugs sein, mit welchem erhitztes Straßenbelagsmaterial für den Straßenbau zu transportieren ist. Im Einsatz auf der Baustelle werden solche Lastentransportfahrzeuge oft in Kombination mit einem Straßenfertiger betrieben, wobei das erhitzte Straßenbelagsmaterial, z.B. Asphaltmaterial, bei langsamem Vortrieb des Lastentransportfahrzeugs dem unmittelbar folgenden Straßenfertiger durch Auskippen aus der Kippmulde zugeführt wird.

Straßenbauasphalt ist ein Asphaltmischgut, welches üblicherweise aus dem Bindemittel Bitumen und Gesteinskörnungen zusammengesetzt ist. Das Asphaltmischgut wird gleich nach der Herstellung mit einer Temperatur zwischen beispielsweise 160 und 200 °C auf die Ladefläche und somit in das Aufnahmevolumen der Kippmulde des Kipperfahrzeugs gebracht.

Es hat sich herausgestellt, dass die Qualität eines Straßenbelags erheblich davon abhängt, mit welcher Temperatur der Asphalt für die Verarbeitung durch einen Straßenfertiger diesem und schließlich dem Boden zugeführt wird. Es hat sich diesbezüglich eine Temperatur von ca. 180 °C bewährt. Bei Unterschreiten dieser Temperatur ist das Material ggf. durchaus noch zu verarbeiten, allerdings zeigen sich im Laufe der Zeit dann später häufig Risse und erhöhter Verschleiß des Straßenbelags, dies vermutlich aufgrund der Inhomogenität der Materialstrukturfestigkeit des zu weit abgekühlten Asphalts beim Auftragen durch den Straßenfertiger. Da schneller Straßenverschleiß auch einen erhöhten volkswirtschaftlichen Schaden bedeutet, wurden Richtlinien erarbeitet, wonach der Straßenasphalt beim Zusammenführen zum Straßenfertiger eine Mindesttemperatur nicht unterschreiten darf, die bei 160 °C liegt.

Um das Problem der zu raschen Abkühlung des Asphaltmischgutes während des Transports zur Baustelle einigermaßen zu beherrschen, wurden bereits Vorschläge gemacht, die Transportbehälter mit wäremisolierenden Behälterwänden auszustatten, wobei die Behälterwandanordnung zumindest bereichsweise zweiwandig mit einander gegenüberliegenden und einen Zwischenraum zwischen sich begrenzenden Wandabschnitten, nämlich einer Innenhaut und einer Außenhaut, ausgebildet - und der Zwischenraum mit einem wärmeisolierenden Feststoffmaterial ausgefüllt ist. Dabei kann es sich z.B. um übliches faseriges oder offenporiges mineralisches Wärmeisolationsmaterial handeln, wie es auch im Hausbau verwendet wird. Auch Kunststoffvliesmaterialien kommen als Wärmeisolationsmaterialien für solche konventionellen Transportbehälter in Frage. Der Transport von erhitztem Asphalt vom Herstellungsort des Asphaltmischgutes zur Baustelle kann mit Lastentransportfahrzeugen, die derartige wärmeisolierte Transportbehälter aufweisen, normalerweise zufriedenstellend durchgeführt werden, so dass das Straßbenbelagsmaterial dem Straßenfertiger auf der Baustelle mit einer Temperatur von mindestens 160 °C zugeführt werden kann. Weitergehende Entwicklungen zielen darauf ab, die Temperatur des transportierten Ladegutes mit Temperatursensoren am Lastentransportbehälter zu überwachen. Die Temperatursensoren und dazugehörende Messleitungen sowie ggf. elektronische Komponenten werden hierzu vorzugsweise in dem Zwischenraum zwischen Innenhaut und Außenhaut der Wandanordnung des Lastentransportbehälters untergebracht.

Bisher bekannte Lastentransportbehälter mit thermischer Isolierung haben einen doppelschaligen Aufbau mit einer Innenhaut aus Blech und mit einer Außenhaut aus auf Rahmenteilen aufgeschweißten und/oder verschraubten bzw. miteinander vernieteten Außenblechen. Der Herstellungsaufwand bei der Fertigung solcher Lastentransportbehälter ist relativ groß. Sollte es bei diesen bekannten Lastentransportbehältern erforderlich werden, einen Zugriff auf den Zwischenraum zwischen Innenhaut und Außenhaut der Wandanordnung zu verschaffen, etwa um das wärmeisolierende Dämmmaterial zu überprüfen oder einen defekten Temperatursensor auszutauschen, so wäre dies nur mit erheblichem Reparatur- und Zeitaufwand möglich, und das mit dem Lastentransportbehälter ausgestattete Lastentransportfahrzeug könnte entsprechend lange nicht für Transportaufgaben eingesetzt werden.

Es sind auch bereits Vorschläge gemacht worden, miteinander verschweißte oder vernietete Außenbleche vermittels außen angebrachter Spannbänder am Lastentransportbehälter zu fixieren. Derartige Lösungen haben sich jedoch nicht in größerem Umfang durchsetzen können, nicht zuletzt auch aus Designgründen. Aus der DE 18 42 640 U ist ein Lastentransportbehälter gemäß dem Oberbegriff des Anspruchs 1 bekannt.

Der vorliegenden Erfindung liegt die Aufgabe zugrunde, einen Lastentransportbehälter der eingangs genannten Art bereitzustellen, bei dem die Außenhaut der doppelschaligen Konstruktion mit geringem Aufwand zuverlässig montierbar und zumindest bereichsweise leicht demontierbar ist, wobei die Art der Montage das äußere Design des Lastentransportbehälters nicht beeinträchtigt.

Zur Lösung dieser Aufgabe wird erfindungsgemäß vorgeschlagen, ein Lastentransportbehälter für ein Lastentransportfahrzeug, umfassend eine Wandanordnung mit Wandbereichen, die eine einen Laderaum des Transportbehälters zumindest bereichsweise begrenzende Innenhaut aus Blech, eine Schicht aus wärmeisolierendem Material außenseitig der Innenhaut und eine das wärmeisolierende Material außen überdeckende Außenhaut aus Blech aufweisen, wobei die Innenhaut mit daran außenliegend in Längsrichtung des Lastentransportbehälters verlaufenden und quer zur Längsrichtung des Lastentransportbehälters beabstandeten Rahmenteilen fest verbunden ist, wobei die Außenhaut aus Blechelementen gebildet ist, die vermittels Spannelementen und Halteelementen zwischen benachbarten Exemplaren der Rahmenteile gespannt und daran fixiert sind, wobei die Spannelemente und Halteelemente an entgegengesetzten Rändern der Blechelemente vorgesehen sind.

Die Blechelemente können z.B. aus nicht rostendem Stahl oder Aluminium gebildet sein und haben einen vorzugsweise rechteckigen Querschnitt. Die Spann- und Halteelemente befinden sich an den Blechelementen vorzugsweise nur an deren Rändern, die sich entlang der betreffenden Rahmenteile, mit denen sie verbunden sind, erstrecken. Die Spann- und Halteelemente können relativ klein ausgebildet sein und/oder verdeckt montiert sein, so dass sie das Design des Lastentransportbehälters nicht nachteilig prägen können.

Die Blechelemente der Außenhaut sind vermittels der Spann- und Halteelemente unter Zugspannung gesetzt, so dass sie am Lastentransportbehälter in großem Maße formstabil fixiert sind und mit der Innenhaut einen gut definierten Zwischenraum für das wärmeisolierende Material begrenzen können. Grundsätzlich kann die Außenhaut ohne Schweißarbeiten an den Lastentransportbehälter angebracht werden. Auch sind keine Nietverbindungen erforderlich. Die Blechelemente der Außenhaut können daher bei Bedarf auf einfache Weise zerstörungsfrei demontiert werden, etwa um Zugang zu dem wärmeisolierenden Material oder ggf. zu Temperatursensoren in dem Zwischenraum zwischen Außenhaut und Innenhaut zu verschaffen. Eine besonders bevorzugte Ausführungsform der Erfindung betrifft somit einen Lastentransportbehälter, bei dem die Blechelemente zerstörungsfrei lösbar zwischen benachbarten Exemplaren der Rahmenteile gespannt und fixiert sind.

Als Spannelemente und Halteelemente kommen z.B. Hakenelemente oder/ und Ankerschrauben oder/und Spannverschlusselemente oder/und Feder elemente in Frage.

Eine bevorzugte Ausführungsform der Erfindung betrifft einen Lastentransportbehälter, bei dem ein betreffendes Blechelement der Außenhaut an einem seiner Ränder eine im Querschnitt hakenförmige Abkantung als Haltelement aufweist, die mit einer komplementären, im Querschnitt hakenförmigen Abkantung eines an einem der Rahmenteile befestigten Einhängbleches verhakend in Eingriff steht, wobei dieses Blechelement an seinem dem vorstehend genannten Rand entgegengesetzten Rand vermittels eines zur Erzeugung einer Spannkraft betätigbaren Spannelementes mit einem benachbarten Rahmenteil verbunden ist. Bei einem solchen Lastentransportbehälter gestaltet sich der Anbau der Außenhaut-Blechelemente besonders einfach, da jedes Blechelement an einem seiner Ränder lediglich in das Einhängblech einzuhängen ist und betreffende Spannelemente lediglich an dem entgegengesetzten Rand spannend zu betätigen sind. Die Spannelemente sind auch Halteelemente. Die erläuterte Art der Fixierung der Blechelemente ist auf einfache Weise so auszugestalten, dass die Blechelemente Temperaturausdehnungen erfahren können, ohne wesentlich zu verspannen, insbesondere wenn sie an ihren Rändern schwimmend überlappend aneinander angeordnet werden.

Bei den Rahmenteilen handelt es sich vorzugsweise um Obergurte und Untergurte des Lastentransportbehälters, wobei die Obergurte am oberen Rand des Lastentransportbehälters in dessen Längsrichtung verlaufen, wohingegen die Untergurte im untersten Bereich des Lastentransportbehälters in dessen Längsrichtung verlaufen. Bei der vorstehend genannten Ausführungsform der Erfindung mit einseitiger Einhängmöglichkeit der Blechelemente ist das Einhängblech vorzugsweise an einem Obergurt angeordnet, wohingegen das zur Erzeugung einer Spannkraft betätigbare Spannelement an einem Untergurt angeordnet ist, so dass sich das genannte Blechelement zwischen Obergurt und Untergurt an einer Seite des Lastentransportbehälters erstreckt. Bei einer Ausführungsform der Erfindung, bei der auch die Unterseite des Lastentransportbehälters thermisch isoliert ist, ist ein betreffendes Einhängblech an einem Untergurt angeordnet, wohingegen das zur Erzeugung einer Spannkraft betätigbare Spannelement an einem dem genannten Untergurt benachbarten Untergurt angeordnet ist, so dass sich das Blechelement an der Unterseite des Lastentransportbehälters zwischen den Untergurten erstreckt.

Vorzugsweise ist der Lastentransportbehälter sowohl an seinen Seitenwänden als auch an der Unterseite mit einer thermischen Isolierung und einer entsprechenden Außenhaut aus Blechelementen ausgestattet, die in der vorstehend beschriebenen Weise anmontiert sind.

Bei dem Lastentransportbehälter nach der Erfindung kann es sich z.B. um eine Kippbrücke für ein Kipperfahrzeug handeln. Als Transportmittel für flüssiges oder pastöses Straßenbaumaterial kann der Lastentransportbehälter insbesondere eine Halfpipe-Muldenform aufweisen.

Gemäß einer bevorzugten Ausführungsform der Erfindung weist der Lastentransportbehälter zwischen der Außenhaut und der Innenhaut der Wandanordnung Abstandshalteelemente auf, über die hinweg die betreffenden Blechelemente zwischen benachbarten Rahmenelementen gespannt sind. Bei den Abstandshalteelementen kann es sich z.B. um Rippen aus Lochblechen handeln, die in Längsrichtung des Lastentransportbehälters voneinander beabstandet sind und quer zur Längsrichtung des Lastentransportbehälters zwischen einander benachbarten Rahmenteilen verlaufen. Die Abstandshalterippen haben gemäß einer bevorzugten Ausführungsform der Erfindung einen außen konvex gekrümmten Verlauf. Damit ist zu erreichen, dass die mittels der Spannmittel und Haltemittel unter Zugspannung gesetzten Blechelemente eine Druckspannung auf die Abstandshalterippen ausüben können. Insbesondere bei Lastentransportbehältern mit Halfpipe-Muldenform, bei denen die Außenhautblechelemente der Muldenkrümmung folgen, dienen die Abstandshalteelemente zur Abstützung der Außenhaut-Blechelemente gegenüber der Innenhaut. Die Abstandshalteelemente sollten grundsätzlich so beschaffen sein, dass sie einen möglichst großen Wärmewiderstand aufweisen und somit keine wirksamen Wärmebrücken zwischen Innenhaut und Außenhaut der Wandanordnung bilden. Zum Schutz der Abstandshalteelemente und der Außenhaut-Blechelemente sind an den Abstandshalteelementen endseitig Schutzkappen oder dgl. aus wäremisolierendem Kunststoff vorgesehen.

Gemäß einer weiteren Ausführungsform der Erfindung sind zumindest einige der Blechelemente der Außenhaut in Längsrichtung des Lastentransportbehälters mit gegenseitiger Randüberlappung aufeinander folgend angeordnet, so dass offene Spalte zwischen den Blechelementen vermieden werden. Im Randüberlappungsbereich sind die aufeinander folgenden Blechelemente vorzugsweise durch eine jeweilige Dichtungsanordnung voneinander isoliert. Die Dichtungsanordnung dient einerseits zur Abdichtung der Randüberlappungsbereiche gegen Feuchtigkeitseintritt in den Zwischenraum zwischen Innenhaut und Außenhaut und auch als mechanischer Schutz der Blechelemente im Überlappungsbereich. Vorzugsweise sind die Blechelemente an ihren einander überlappenden Rändern nicht weiter fixiert, so dass keine Schweiß-, Niet- oder Schraubverbindungen erforderlich sind.

Zwischen der Außenhaut und der Innenhaut der Wandanordnung sind vorzugsweise Sensoren vorgesehen. Dies können z.B. mehrere am Lastentransportbehälter verteilte Temperatursensoren für die Temperaturerfassung der Innenhaut bzw. des Ladegutes sein. Auch Feuchtesensoren zur Überwachung des Feuchtegehaltes des wärmeisolierenden Materials können in dem Zwischenraum vorgesehen sein.

Gegenstand der Erfindung ist auch ein Lastentransportfahrzeug mit einem Lastentransportbehälter nach einem der Ansprüche 1 - 15. Das Lastentransportfahrzeug kann ein motorisiertes Fahrzeug oder ein Anhängerfahrzeug sein. Es kann insbesondere ein Kipperfahrzeug, insbesondere Halfpipe-Muldenkipperfahrzeug sein.

Ein Ausführungsbeispiel eines Lastentransportbehälters nach der Erfindung wird nachstehend unter Bezugnahme auf die Figuren näher erläutert.
- Figur 1: zeigt eine Seitenansicht eines Lastentransportbehälters nach der Erfindung, der eine Halfpipe-Muldenform aufweist.
- Figur 2: zeigt eine Teilschnittdarstellung des Lastentransportbehälters aus Figur 1 mit der in Figur 1 mit II-II gekennzeichneten Schnittebene.
- Figur 3: zeigt eine Teilschnittdarstellung des Lastentransportfahrzeugs mit der in Figur 1 bei III-III angedeuteten Schnittebene.
- Figur 4: zeigt eine Teilschnittdarstellung des Lastentransportbehälters mit der in Figur 1 bei IV angedeuteten Schnittebene.
- Figur 5: zeigt ein Detail aus Figur 2, welches in Figur 2 mit V gekennzeichnet ist.
- Figur 6: zeigt ein Detail aus Figur 2, welches in Figur 2 bei VI angedeutet ist.
- Figur 7: zeigt eine Variante des Details aus Fig. 6.

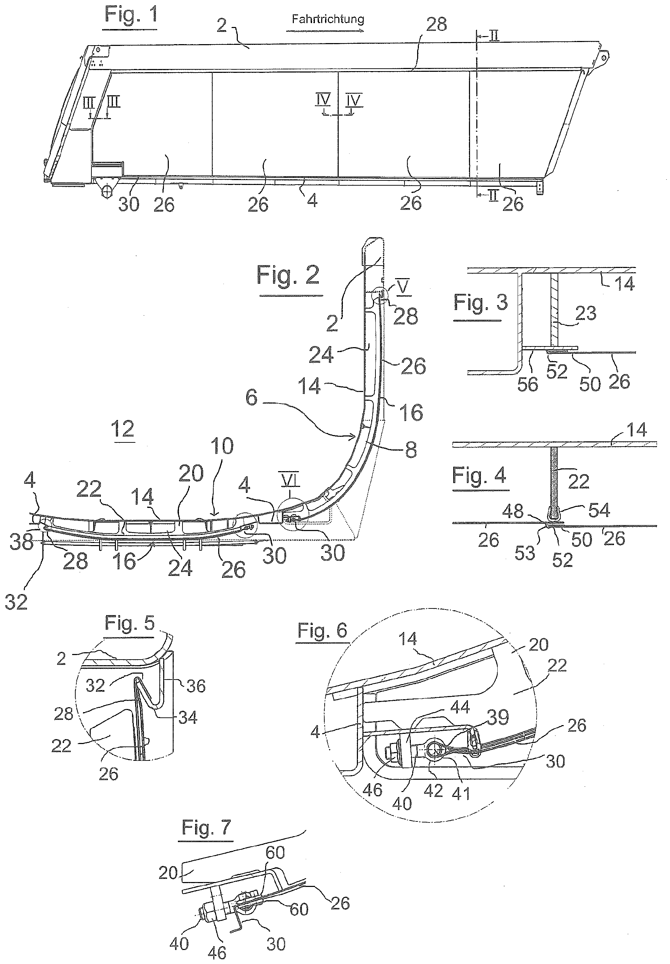

Der in Fig. 1 isoliert in Seitenansicht dargestellte Lastentransportbehälter ist eine Kippbrücke für ein Kipperfahrzeug. Die Kippbrücke hat eine Halfpipe-Muldenform, wie dies insbesondere aus Fig. 2 zu ersehen ist, und weist Obergurte 2 an den oberen Längsrändern, ebenfalls in Längsrichtung des Lastentransportbehälters verlaufende Untergurte 4 im unteren Bereich und eine doppelschalige Wandanordnung 6 mit Seitenwandbereichen 8 und Bodenwandbereichen 10 auf. Die Wandbereiche 8, 10 weisen eine den Laderaum 12 des Behälters unten und seitlich begrenzende Innenhaut 14 aus Blech und eine Außenhaut 16 aus Blech auf. Die Innenhaut 14 ist außenseitig mit den Obergurten 2 und mit den Untergurten 4 verschweißt. Ferner sind mit der Innenhaut 14 außenseitig Haltestege 20 von Abstandshalteelementen 22 verschweißt, die nach außen von der Innenhaut 14 abstehen und aus einem Blech mit Aussparungen zwischen den Haltestegen 20 gebildet sind. Die Abstandshalteelemente 22 sind als Abstandshalterippen ausgebildet und definieren einen Abstand 24 zwischen Innenhaut 14 und Außenhaut 16 des betreffenden Wandabschnittes 8, 10, wobei in dem Zwischenraum, der durch diesen Abstand 24 definiert ist, ein Dämmmaterial (nicht gezeigt) als Wärmeisolierungsmaterial aufgenommen ist. Vorzugsweise sind die Zwischenräume im Wesentlichen vollständig mit dem Dämmmaterial ausgefüllt. Bei dem Dämmmaterial kann es sich z.B. um übliches faseriges oder offenporiges mineralisches Wärmeisolationsmaterial handeln, wie es auch im Hausbau verwendet wird. Auch Kunststoffvliesmaterialien kommen als Wärmeisolationsmaterialien in Frage.

Besonderheit der vorliegenden Erfindung ist die Art der Montage der Außenhaut 16. Die Außenhaut 16 besteht aus Blechelementen 26 mit parallelen Rändern 28, 30. An ihren Rändern 28 sind die Blechelemente 26 unter Bildung eines Hakenabschnitts 32 nach außen abgekantet (vgl. Fig. 5). Der Hakenabschnitt 32 erstreckt sich über die gesamte Länge des Randes 28 und steht mit einem komplementären Hakenabschnitt 34 eines in Fig. 5 an einem Obergurt 2 angeschweißten Einhängbleches 36 in Eingriff. Im Falle der die Außenhaut 16 der Seitenwände bildenden Blechelemente 26 befinden sich die Hakenabschnitte 32 an den oberen Rändern 28, wobei die Einhängbleche 36 an den Obergurten 2 angeschweißt sind. Im Falle der die Außenhaut des Bodens bildenden Blechelemente 26 befindet sich ein entsprechendes Hakenelement 32 an dem in Fig. 2 linken Rand 28, wobei ein Einhängblech mit einem komplementären Hakenabschnitt an dem in Fig. 2 linken Untergurt 4 angeschweißt ist und mit dem Hakenabschnitt 32 des Blechelementes 26 in Eingriff steht.

Die Außenhaut-Blechelemente 26 der Seitenwände des Behälters sind an ihren unteren Rändern zu einer jeweiligen Schlaufe 39 (vgl. Fig. 6) gebogen, die durch (nicht gezeigte) Schraubverbindungen oder Nietverbindungen oder dgl. stabilisiert ist und von einer sich in Längsrichtung des Behälters erstreckenden Stange 41 durchsetzt ist. Die Stange 41 erstreckt sich durch einen Augenabschnitt 42 einer Spannschraube oder Ankerschraube 40, die an einem an dem in Fig. 2 rechten Untergurt 4 angeschweißten Rahmenteil 44 gehalten ist. Das Blechelement 26 kann im Bereich des Augenabschnittes 42 so weit freigeschnitten sein, dass Temperaturausdehnungsbewegungen des Blechelementes 26 relativ zur Stange 41 und zu den Spannelementen insgesamt spannungsarm möglich sind. Durch Drehen der Schraubenmutter 46 kann die Schraube 40 unter Aufbringung einer Zugspannung auf das betreffende Blechelement 26 angezogen werden. Dabei werden die Blechelemente 26 über die Abstandshalterippen 22 hinweg gespannt. Aufgrund der äußeren Krümmung der Abstandshalterippen 22 kommt es dabei zu einer Druckkraftübertragung von dem betreffenden Blechelement 26 auf die Abstandshalterippen. Dies trägt zur Formstabilität der zweischaligen Anordnung insbesondere im Außenhautbereich bei. Gemäß einer vorteilhaften Variante der in Fig. 6 gezeigten Anordnung kann eine Feder im Kraftübertragungsweg des Spannelementes, z.B. eine zwischen dem Rahmenteil 44 und dem Rand 30 des Blechelementes 26 wirksame Zugfeder vorgesehen sein.

Vorzugsweise sind die außen gekrümmten Abstandshalterippen 22 so in Längsrichtung des Behälters verteilt angeordnet, dass jedes Blechelement 26 an seinen quer zur Behälterlängsrichtung verlaufenden Rändern 48, 50 mittels einer jeweiligen Abstandshalterippe 22 gegenüber der Innenhaut 14 abgestützt ist. Diese Abstützung erfolgt vorzugsweise in Überlappungsbereichen der Ränder 48, 50 der Blechelemente 26, wie dies in Fig. 4 dargestellt ist. Aus Fig. 4 ist zu ersehen, dass die Blechelemente 26 an ihren Rändern 48, 50 überlappend angeordnet sind, wobei das in Fahrtrichtung des mit dem Lastentransportbehälter ausgestatteten Fahrzeugs weiter vorn angeordnete Blechelement 26 in dem Überlappbereich außen aufliegt und im Beispielsfall ein Dichtungselement 52 trägt, welches sich entlang des gesamten Randes 50 erstreckt und sich mit einer Dichtlippe 53 an dem Randbereich 48 des im Überlappbereich weiter innen liegenden Blechelementes 26 abstützt. Der Randbereich 48 dieses Blechelementes 26 liegt an einem Kantenschutzteil 54 an, welches den äußeren Rand der Abstandshalterippe 22 schützend überdeckt.

In entsprechender Weise sind auch die unteren Außenhaut-Blechelemente 26 montiert, wobei eine Spannschraubenanordnung, wie in Fig. 6 dargestellt, entsprechend auch an den in Fig. 2 unteren Außenhaut-Blechelementen 26 vorgesehen und an dem rechten Untergurt 4 fixiert ist. Auch die Abstützung der unteren Außenhaut-Blechelemente 26 an der Innenhaut 14 erfolgt vermittels außen gekrümmter Abstandshalterippen 22 in gleicher Weise, wie es oben in Bezug auf die seitlichen Außenhaut-Blechelemente 26 erläutert wurde.

In Fig. 3 ist für das in Fig. 1 linke Außenhaut-Blechelement 26 dessen Abstützung vermittels eines Dichtungselementes 52 an einem Anschlussblech 56 einer betreffenden Abstandshalterippe 23 dargestellt, wobei das Anschlussblech 56 an einer hinteren Versteifungsrunge des Lastentransportbehälters angeschweißt ist.

In ähnlicher Weise ist auch der vordere Rand des in Fig. 1 rechten Außenhaut-Blechelementes 26 abgestützt.

Die Außenhaut-Blechelemente 26 sind aufgrund der vorstehend beschriebenen Montageart formstabil an dem Lastentransportbehälter fixiert und können eine klemmende Wirkung auf das in dem Zwischenraum 24 befindliche Dämmmaterial ausüben. Vorteilhaft ist es, dass die Außenhaut-Blechelemente 26 bei Bedarf auch schnell zerstörungsfrei demontiert werden können, etwa um Zugang zu dem Dämmmaterial oder zu etwaigen Sensoren in dem Zwischenraum 24 zu verschaffen.

In den Fig. 1 und 2 ist lediglich ein Seitenwandabschnitt 8 dargestellt. Ein entsprechender Seitenwandabschnitt ist vorzugsweise spiegelsymmetrisch dazu auf der gegenüberliegenden Behälterseite vorgesehen und auf die gleiche Weise mit einer Außenhaut ausgestattet.

Die Innenhaut 14 ist vorzugsweise aus Stahlblechen gebildet. Auch kommt eine Variante in Frage, bei der die Innenhaut zumindest bereichsweise aus Aluminiumblechen gebildet ist. Gleiches gilt für die Außenhaut-Blechelemente.

Der Lastentransportbehälter kann auch an seiner Frontwand und an seiner Heckwand entsprechend wärmeisoliert und mit Außenhaut-Blechelementen 26 ausgestattet sein.

In Fig. 7 ist noch eine Variante zur Befestigung des Randes 30 der Außenhaut-Blechelemente 26 an einer Spannschraube 40 dargestellt. Das Blechelement 26 ist an dem Rand 30 abgekantet und zwischen zwei Halteblechteilen eingeklemmt, welche durch Nietverbindungen miteinander verbunden sind, die das Blechelement 26 durchsetzen. Die Halteblechteile 60 sind an der Spannschraube 40 ggf. mit seitlichem Temperaturausdehnungsausgleichsspiel gehalten.

In dem gezeigten Ausführungsbeispiel bilden die Spannschrauben 40 und die Hakenabschnitte 32 Spann- und Haltemittel zur Befestigung der Außenhaut-Blechelemente 26 an den Gurten 2, 4 des Behälters.

Nicht gezeigt in den Figuren ist eine entfernbare obere Abdeckung des Behälters, die ebenfalls zur Verringerung von Wärmeverlusten des Ladegutes dient.

## Patentansprüche

1. Lastentransportbehälter für ein Lastentransportfahrzeug,
umfassend
eine Wandanordnung mit Wandbereichen, die eine einen Laderaum (12) des Lastentransportbehälters zumindest bereichsweise begrenzende Innenhaut (14) aus Blech, eine Schicht aus wärmeisolierendem Material außenseitig der Innenhaut (14) und eine das wärmeisolierende Material außen überdeckende Außenhaut (16) aus Blech aufweisen, wobei die Innenhaut (14) mit daran außenliegend in Längsrichtung des Lastentransportbehälters verlaufenden und quer zur Längsrichtung des Lastentransportbehälters beabstandeten Rahmenteilen (2, 4) fest verbunden ist, wobei die Außenhaut (16) aus Blechelementen (26) gebildet ist, **dadurch gekennzeichnet, dass** die Außenhaut-Blechelemente (26) vermittels Spannelementen (40) und Halteelementen (32, 40) zwischen benachbarten Exemplaren der Rahmenteile (2, 4) gespannt und daran fixiert sind.

2. Lastentransportbehälter nach Anspruch 1, wobei die Blechelemente (26) lösbar zwischen benachbarten Exemplaren der Rahmenteile (2, 4) gespannt und fixiert sind.

3. Lastentransportbehälter nach einem der vorhergehenden Ansprüche, wobei die Spannelemente und Halteelemente:
Hakenelemente (32) oder/und
Ankerschrauben (40) oder/und
Spannverschlusselemente oder/und
Federelemente umfassen.

4. Lastentransportbehälter nach einem der vorhergehenden Ansprüche, wobei wenigstens eines der Blechelemente (26) an einem seiner Ränder (28) eine im Querschnitt hakenförmige Abkantung als Halteelement (32) aufweist, die mit einer komplementären, im Querschnitt hakenförmigen Abkantung (34) eines an einem (2) der Rahmenteile (2, 4) befestigten Einhängbleches (36) verhakend in Eingriff steht, und wobei dieses Blechelement (26) an seinem dem genannten einen Rand (28) entgegengesetzten Rand (30) vermittels eines zur Erzeugung einer Spannkraft betätigbaren Spannelementes (40) mit einem dem genannten einen Rahmenteil (2) benachbarten Rahmenteil (4) verbunden ist.

5. Lastentransportbehälter nach einem der vorhergehenden Ansprüche, wobei die Rahmenteile Obergurte (2) und Untergurte (4) des Lastentransportbehälters sind.

6. Lastentransportbehälter nach Anspruch 4 und 5, wobei das Einhängblech (36) an einem Obergurt (2) angeordnet ist, wohingegen das zur Erzeugung einer Spannkraft betätigbare Spannelement (40) an einem Untergurt (4) angeordnet ist, so dass sich das genannte eine Blechelement (36) zwischen Obergurt (2) und Untergurt (4) an einer Seite des Lastentransportbehälters erstreckt.

7. Lastentransportbehälter nach Anspruch 4 und 5, wobei das Einhängblech an einem Untergurt (4) angeordnet ist, wohingegen das zur Erzeugung einer Spannkraft betätigbare Spannlement an einem dem genannten Untergurt (4) benachbarten Untergurt (4) angeordnet ist, so dass sich das genannte eine Blechelement (26) an einer Unterseite des Lastentransportbehälters zwischen den Untergurten (4, 4) erstreckt.

8. Lastentransportbehälter nach einem der vorhergehenden Ansprüche, wobei er eine Kippbrücke für ein Kipperfahrzeug ist.

9. Lastentransportbehälter nach einem der vorhergehenden Ansprüche, wobei er eine Halfpipe-Muldenform aufweist.

10. Lastentransportbehälter nach einem der vorhergehenden Ansprüche, wobei zwischen der Außenhaut (16) und der Innenhaut (14) der Wandbereiche der Wandanordnung Abstandshalteelemente (22) vorgesehen sind, über die hinweg die betreffenden Blechelemente (26) zwischen benachbarten Rahmenelementen (2, 4) gespannt sind.

11. Lastentransportbehälter nach Anspruch 10, wobei die Abstandshalteelemente (22) an ihren nach außen weisenden Enden Schutzelemente (54) aus wärmeisolierendem Kunststoff aufweisen.

12. Lastentransportbehälter nach Anspruch 10 oder 11, wobei die Abstandshalteelemente (22) Rippen aus Lochblech sind, die in Längsrichtung des Lastentransportbehälters voneinander beabstandet sind und quer zur Längsrichtung des Lastentransportbehälters zwischen einander benachbarten Rahmenteilen (2, 4) verlaufen.

13. Lastentransportbehälter nach einem der vorhergehenden Ansprüche, wobei zumindest einige der Blechelemente (26) der Außenhaut (16) in Längsrichtung des Lastentransportbehälters mit gegenseitiger Randüberlappung aufeinanderfolgend angeordnet sind.

14. Lastentransportbehälter nach Anspruch 13, wobei die aufeinanderfolgenden Blechelemente (26) im Randüberlappungsbereich durch eine jeweilige gemeinsame Dichtungsanordnung (52) voneinander isoliert sind.

15. Lastentransportbehälter nach einem der vorhergehenden Ansprüche, wobei zwischen der Außenhaut (16) und der Innenhaut (14) der Wandanordnung Sensoren, insbesondere Temperatursensoren, vorgesehen sind.

16. Lastentransportfahrzeug mit einem Lastentransportbehälter nach einem der vorhergehenden Ansprüche.

## Claims

1. Load transport container for a load transporting vehicle, comprising a wall arrangement that comprises wall regions having a sheet metal inner skin (14) which delimits at least portions of a loading space (12) of the load transport container, a layer of heat-insulating material on the outside of the inner skin (14) and a sheet metal outer skin (16) that covers the outside of the heat-insulating material, the inner skin (14) being rigidly connected to frame parts (2, 4) which extend on the outside of said inner skin in the longitudinal direction of the load transport container and are spaced apart transversely to the longitudinal direction of the load transport container, the outer skin (16) being made of sheet metal elements (26), **characterised in that** the sheet metal elements (26) of the outer skin are tensioned by means of tensioning elements (40) and retaining elements (32, 40) between adjacent members of the frame parts (2, 4) and are fixed thereto.

2. Load transport container according to claim 1, wherein the sheet metal elements (26) are releasably tensioned and fixed between adjacent members of the frame parts (2, 4).

3. Load transport container according to any of the preceding claims, wherein the tensioning elements and retaining elements comprise
hook elements (32) and/or
anchor bolts (40) and/or
tension locking elements and/or
spring elements.

4. Load transport container according to any of the preceding claims, wherein at least one of the sheet metal elements (26) comprises a bent region in the form of a retaining element (32) on one of its edges (28), the cross section of which bent region is hook-shaped, and which is in hooked engagement with a complementary bent region (34) of a suspension plate (36) that is fastened to one (2) of the frame parts (2, 4), the cross section of which bent region is hook-shaped, and wherein, at its edge (30) that is opposite said one edge (28), said sheet metal element (26) is connected to a frame part (4), that is adjacent to said one frame part (2), by means of a tensioning element (40) that can be actuated to generate a tensioning force.

5. Load transport container according to any of the preceding claims, wherein the frame parts are an upper chord (2) and a lower chord (4) of the load transport container.

6. Load transport container according to claims 4 and 5, wherein the suspension plate (36) is arranged on an upper chord (2), whereas the tensioning element (40) that can be actuated to generate a tensioning force is arranged on a lower chord (4) such that said one sheet metal element (36) extends between the upper chord (2) and the lower chord (4) on a side of the load transport container.

7. Load transport container according to claims 4 and 5, wherein the suspension plate is arranged on a lower chord (4), whereas the tensioning element that can be actuated to generate a tensioning force is arranged on a lower chord (4) that is adjacent to said lower chord (4) so that said one sheet metal element (26) extends between the lower chords (4, 4) on an underside of the load transport container.

8. Load transport container according to any of the preceding claims, wherein said container is a tipper bed for a tipping vehicle.

9. Load transport container according to any of the preceding claims, wherein said container comprises a halfpipe shaped trough.

10. Load transport container according to any of the preceding claims, wherein spacer elements (22) are provided between the outer skin (16) and the inner skin (14) of the wall regions of the wall arrangement, by means of which the particular sheet metal elements (26) are tensioned between adjacent frame elements (2, 4).

11. Load transport container according to claim 10, wherein the spacer elements (22), at their ends that point outwards, comprise protective elements (54) made of heat-insulating plastics material.

12. Load transport container according to either claim 10 or claim 11, wherein the spacer elements (22) are ribs made of perforated sheet metal that are spaced apart in the longitudinal direction of the load transport container and extend transversely to the longitudinal direction of the load transport container between adjacent frame parts (2, 4).

13. Load transport container according to any of the preceding claims, wherein at least some of the sheet metal elements (26) of the outer skin (16) are arranged in succession in the longitudinal direction of the load transport container such that their edges overlap one another.

14. Load transport container according to claim 13, wherein the sheet metal elements (26) arranged in succession are insulated from one another in the region where their edges overlap by a particular common sealing arrangement (52).

15. Load transport container according to any of the preceding claims, wherein sensors, in particular temperature sensors, are provided between the outer skin (16) and the inner skin (14) of the wall arrangement.

16. Load transport vehicle comprising a load transport container according to any of the preceding claims.

## Revendications

1. Récipient de transport de charges pour un véhicule de transport de charges, comprenant une structure de paroi avec des zones de paroi, lesquelles présentent un revêtement intérieur (14) en tôle délimitant, tout au moins par endroits, un compartiment de chargement (12) du récipient de transport de charges, une couche en matériau thermiquement isolant située sur la face extérieure du revêtement intérieur (14), ainsi qu'un revêtement extérieur (16) en tôle recouvrant à l'extérieur le matériau thermiquement isolant, où le revêtement intérieur (14) est relié de manière fixe avec des parties de châssis (2, 4) situées à distance dudit revêtement intérieur (14), dont le cheminement desquelles s'étend, en étant situé à l'extérieur, dans la direction longitudinale du récipient de transport de charges et à la transversale de la direction longitudinale du récipient de transport de charges, où le revêtement extérieur (16) est formé à partir d'éléments en tôle (26), **caractérisé en ce que** les éléments en tôle (26) du revêtement extérieur sont serrés, au moyen d'éléments de serrage (40) et d'éléments de maintien (32, 40), entre des exemplaires adjacents des parties de châssis (2, 4) et y sont fixés.

2. Récipient de transport de charges selon la revendication 1, où les éléments en tôle (26) sont serrés et fixés de manière amovible entre des exemplaires adjacents des parties de châssis (2, 4).

3. Récipient de transport de charges selon l'une des revendications précédentes, où les éléments de serrage et les éléments de maintien comprennent :
- des éléments formant crochets (32) ou/et
- des vis d'ancrage (40) ou/et
- des éléments de fermeture à genouillère ou/et
- des éléments formant ressorts.

4. Récipient de transport de charges selon l'une des revendications précédentes, où au moins l'un des éléments en tôle (26) présente, au niveau de l'une de ses bordures (28), une partie repliée, en forme de crochet dans sa section transversale, servant d'élément de maintien (32), laquelle partie repliée est en prise, de manière à venir s'accrocher, avec une partie repliée (34) complémentaire, laquelle est en forme de crochet dans la section transversale, d'une tôle de suspension (36) fixée à l'une (2) des parties de châssis (2, 4), et où cet élément en tôle (26) est relié à une partie de châssis (4) adjacente à ladite partie de châssis (2) mentionnée, ladite liaison ayant lieu au niveau sa bordure (30) située à l'opposé de ladite bordure (28) mentionnée, au moyen d'un élément de serrage (40) pouvant être appliqué en vue de la génération d'une force de serrage.

5. Récipient de transport de charges selon l'une des revendications précédentes, où les parties de châssis sont des ceintures supérieures (2) et des ceintures inférieures (4) du récipient de transport de charges.

6. Récipient de transport de charges selon les revendications 4 et 5, où la tôle de suspension (36) est disposée au niveau d'une ceinture supérieure (2), tandis que l'élément de serrage (40) pouvant être appliqué en vue de la génération d'une force de serrage est disposé au niveau d'une ceinture inférieure (4), de telle sorte que ledit élément en tôle (36) mentionné s'étend entre la ceinture supérieure (2) et la ceinture inférieure (4), au niveau d'un côté du récipient de transport de charges.

7. Récipient de transport de charges selon les revendications 4 et 5, où la tôle de suspension est disposée au niveau d'une ceinture inférieure (4), tandis que l'élément de serrage pouvant être appliqué en vue de la génération d'une force de serrage est disposé au niveau d'une ceinture inférieure (4) adjacente à ladite ceinture inférieure (4) mentionnée, de telle sorte que ledit élément en tôle (26) mentionné s'étend entre les ceintures inférieures (4, 4), au niveau d'une face inférieure du récipient de transport de charges.

8. Récipient de transport de charges selon l'une des revendications précédentes, où ledit récipient de transport de charges est un pont à balancier pour un véhicule à benne.

9. Récipient de transport de charges selon l'une des revendications précédentes, où ledit récipient de transport de charges présente une forme de benne en demi-lune.

10. Récipient de transport de charges selon l'une des revendications précédentes, où des éléments d'écartement (22) sont prévus entre le revêtement extérieur (16) et le revêtement intérieur (14) des zones de paroi de la structure de paroi, tout au long desquels les éléments en tôle (26) concernés sont serrés entre des éléments de châssis (2, 4) adjacents.

11. Récipient de transport de charges selon la revendication 10, où les éléments d'écartement (22) présentent, au niveau de leurs extrémités tournées vers l'extérieur, des éléments de protection (54) en matière plastique thermiquement isolante.

12. Récipient de transport de charges selon la revendication 10 ou 11, où les éléments d'écartement (22) sont des nervures en tôle perforée qui sont situées à distance les unes des autres dans la direction longitudinale du récipient de transport de charges et dont le cheminement s'étend à la transversale de la direction longitudinale du récipient de transport de charges, entre des parties de châssis (2, 4) qui sont adjacentes les unes par rapport aux autres.

13. Récipient de transport de charges selon l'une des revendications précédentes, où tout au moins certains des éléments en tôle (26) du revêtement extérieur (16) sont disposés les uns à la suite des autres dans la direction longitudinale du récipient de transport de charges avec un chevauchement mutuel des bordures.

14. Récipient de transport de charges selon la revendication 13, où les éléments en tôle (26) disposés les uns à la suite des autres sont isolés les uns des autres dans la zone de chevauchement des bordures, par l'intermédiaire d'une structure formant garniture d'étanchéité (52) commune et respective.

15. Récipient de transport de charges selon l'une des revendications précédentes, où des sondes, en particulier des sondes de température, sont prévues entre le revêtement extérieur (16) et le revêtement intérieur (14) de la structure de paroi.

16. Véhicule de transport de charges avec un récipient de transport de charges selon l'une des revendications précédentes.
